# EUROPEAN PATENT APPLICATION

(11) **EP 1 801 480 A1**
(43) Date of publication of application: **27.06.2007**
(21) Application number: 05077937.0
(22) Date of filing: 20.12.2005
(51) Int. Cl.: F16L 3/223

(54) **Clip for holding tubes together**

(71) Applicant: NewFactory BV, 1015 DE Amsterdam (NL)
(72) Inventor: van Ophem, Leo, Antonius, 2014 XS Harlem (NL)
(74) Representative: Lips, Hendrik Jan George

(57) **Abstract**

A clip together profile (1), called spiderclip, is suitable for keeping together preferably groups of four tubes or scaffold tubes (13,14,15,16) of, for example, quick-building scaffolds for storage and, for example, transporting them by hand, so that the tubes or scaffold tubes (13,14,15,16) will not roll away during stacking and for quick-building scaffolds can easily be moved manually. The clip together profile (1) preferably consists of four tube stubs or annuluses (2,3,4,5), which are interconnected by ribs (6,7,8,9) and is made by means of injection moulding.

## Description

The present invention relates to a device to mutually couple round tubes during storage and/or manual transport or by crane.

When moving and/or transporting tubes, especially scaffold tubes, in practice two slings must be fixed around a bundle of scaffold tubes, this must also be done on a surface with raised profiles, because stacked scaffold tubes, because of the weight during stacking, immediately roll away and spread over the surface, which is dangerous and untidy. Also, the scaffold tubes must be transported one by one, which is time consuming and thus expensive.

In the Offenlegungsschrift DE 3609104 A1, submitted on 19-03-1986 from the submitter Klöckner-Humboldt-Deutz AG, 500 KEULEN, Germany, titled: "Klemmschelle zur Hälterung eines Rohrbundels", a tube clamp is described according to the known state of the art. Here, it concerns two in each other screwable parallel L-shaped rods by which a row of tubes, for example 8 pieces, can be clamped together and, in this way, can form a flat package. Thus, with the tube clamp a number of tubes, mostly round tubes, can be continuously clamped to each other in a layer.

Here, it mostly concerns to keep the tubes together during transport and storage, because otherwise the tubes will easily roll away horizontally. It concerns a rather large quantity of tubes, mostly steel tubes, to keep together in a flat package. Thus not for the transport of a number of short tubes constructed as end frames or shores, mostly of aluminium, for quick-building scaffolds, to keep together in pairs, and shores in threesome or foursome, so that the packages can still be carried by hand from the truck to the users location.

In the Offenlegungsschrift DE 19908621 A1, submitted on 27-02-1999 from the submitter Sjöberg, Renate, 57271 Hilchenbach, Germany, titled: "Vorrichtung zum gesichterten Laden von Rundkörpern, vorzugsweise Rohren o dgl auf Ladeflächen von Lastkraftwagen, Waggons von Schienenfahrzeugen o dgl", is a sizeable system to keep packages of tubes together for transport according to the known state of the art. Here, it also concerns to keep, for example tubes, and mostly steel heavy tubes in large packages together to be able to transport these safely per truck or railway carriage and then transport them further by crane. Here, it concerns flat store elements with partly round recesses, in which the tubes are laid loose. Said store elements are coupable in horizontal sense and then the complete packet is stacked in vertical sense and strapped with a steel strip.

The aforementioned shows that according to the state of the art tube bundles with elements with round recesses are stackable and lockable to packages mainly for storage and transport, but that these solutions are not suitable for lighter scaffold material, in which this does not offer a solution for up to four aluminium tubes, which can easily be carried by hand. Therefore, the existing known solutions for local use or transport for practical use by hand have a number of disadvantages.

It is the intention or aim of the present invention to improve this, and as such to couple a number of scaffold tubes, mostly aluminium, easily by hand detachable with each other without further means, so that an effective transport and stacking of the tubes can be done in a stable way without further facilities.

For this a clip together profile for tubes according to the invention is further developed and/or modified in a very inventive way, characterized in that, a clip together profile or spiderclip is constructed in such a way, that several tubes or scaffold tubes with diameter D can be quickly mutually clipped together detachably by hand without any further means.

The advantage is that said element is constructed as a clip together profile for several tubes, in which the problem of stacking and/or rolling away is solved and several tubes can be easily taken away by hand and thus an efficient handling of tubes and/or scaffold tubes at work is possible. It appears that in practice that four tubes of a quick-building scaffold are very well transportable by hand.

The length and weight of the shores varies, for example as follows:
Horizontal shore 185 mm, approximately 2,0 kg
Horizontal shore 245 mm, approximately 2,4 kg
Horizontal shore 305 mm, approximately 3,2 kg
Diagonal shore 185 mm, approximately 1,8 kg
Diagonal shore 245 mm, approximately 2,2 kg
Diagonal shore 305 mm, approximately 2,6 kg

Further, the device according to the invention is further developed in such a way, that said clip together profile is constructed of at least four tube stubs or annuluses with wall thickness t, out of which a ring sector of approximately 90 degrees has been removed and in which the remaining part of the tube stubs or annuluses are attached to each other by means of ribs and a stiffening disc, and that for an embodiment of the clip together profile four tube stubs or annuluses are mutually coupled at 90 degrees by means of said ribs and matching stiffening disc.

The advantages are, that a clip together profile is created which can be easily applied by hand, which is very handy during use for up to 4 tubes or scaffold tubes or two scaffold frames.

Furthermore, the device according to the invention is further developed in such a way, that the clip together profile is made as one piece by means of injection moulding with a working length X, and that the diameter D is approximately 40-55 mm and the length X is approximately 18 mm and the wall thickness t is approximately 3 or 4 mm, and that the material of said clip together profile is a plastic, such as, for example, polyacetate or polyoxymethylene (POM).

The advantages are, that a light clip together profile made of a non corroding material, can be produced cheaply and is very well useable to bundle and transport several scaffold tubes or tubes by hand, which is very handy for the professional.

The preferred construction of the invention will be described by way of example, and with reference to the accompanying drawing. In which:
- Fig. 1: shows a view in oblique projection of the clip together profile for four tubes according to a preferred embodiment of the invention;
- Fig. 2: shows a view over the line II of figure 1;
- Fig. 3: shows a view over the line III of figure 1; and
- Fig. 4A-4D: shows a view in oblique projection of the clip together profile for four tubes, in which the number of clamped tubes decreases successively.

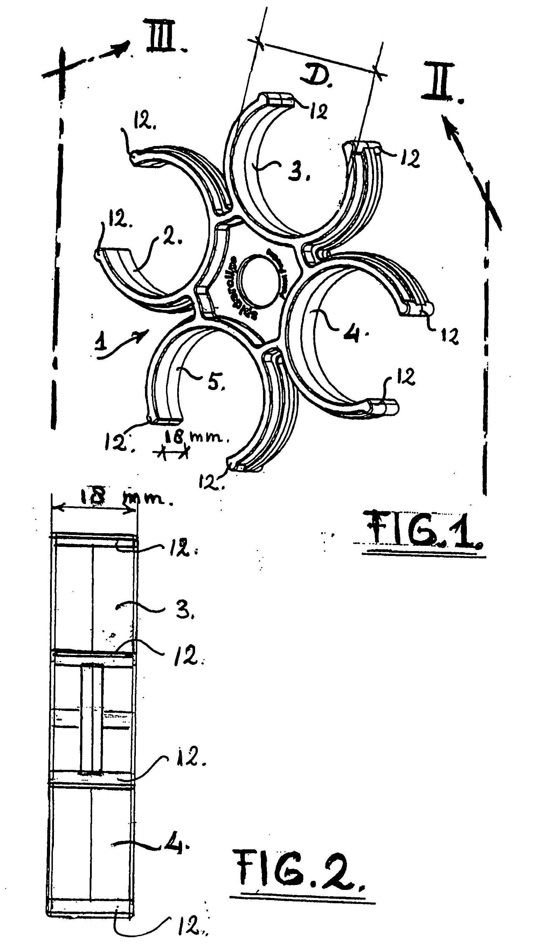

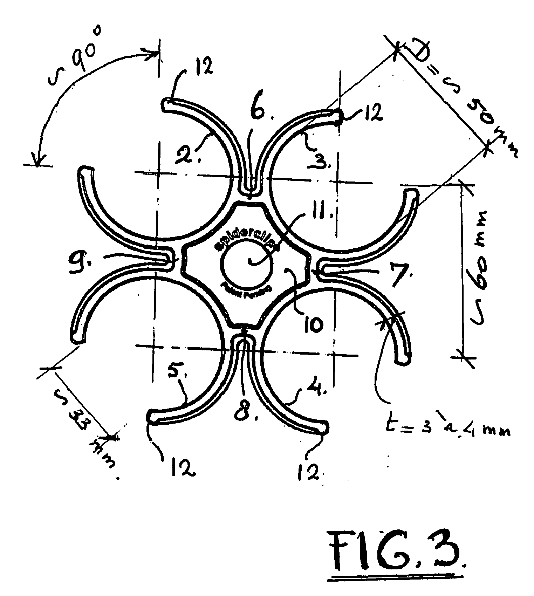

Figure 1 shows a view in oblique projection of the clip together profile 1 according to a preferred embodiment of the invention. Here, it concerns a preferred embodiment of the clip together profile 1 to bundle four tubes or scaffold tubes. The construction consists of four at mutual angles of approximately 90 degrees protruding tube stubs 2, 3, 4 and 5, which are cut open at approximately 90 degrees and provided with a cylinder-shaped beaded edge 12 (see also figure 3) and thus form a kind of annulus to manually clamp over the tubes. The clip together profile 1 is made of plastic, such as, for example, polyacetate or polyoxymethylene (POM), in which the wall thickness t is approximately 3 to 4 mm. The tube stubs or annuluses 2, 3, 4 and 5 are interconnected by ribs 6, 7, 8 and 9 and the stiffening disc 10.

Figure 2 shows a view over the line II of figure 1 by way of illustration, in which the same parts are indicated with the same numbers.

Like this, in figure 3 a view over the line III of figure 1 is shown, and concerning the numbers, they are the same as in figures 1 and 2. Further, a circle-shaped opening 11 is applied in the centre to simplify storage and transport of several clip together profiles. Furthermore, the preferred dimensions are further extended. Following, with this spiderclip 1 a worker can easily carry by hand four tubes of a quick-building scaffold over and to the construction area. For length and weight, see the introduction of the description.

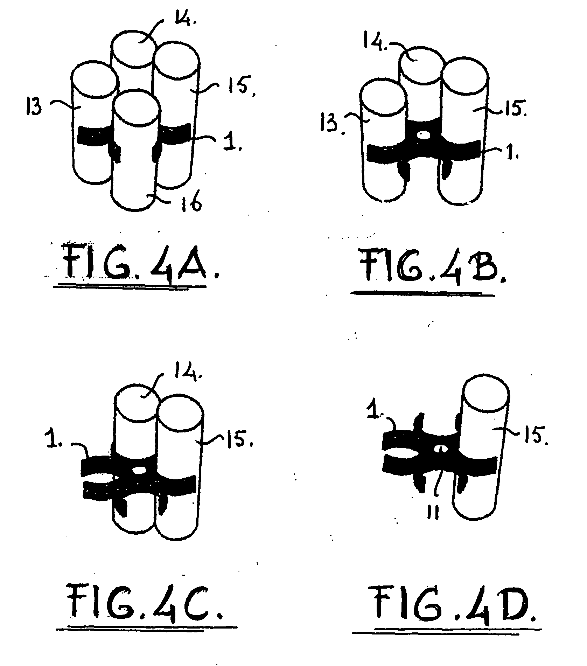

Figure 4A up to 4D show a number of views in oblique projection of the clip together profile 1, in which the number of clamped tubes 13, 14, 15 and 16 decreases successively.

Finally it has to be emphasized, that the above description constitutes a preferred embodiment of the clip together profile 1, in which the coupling can be done by means of clips and that naturally further modifications and such are possible without departing the scope of this patent description.

## Claims

1. Device to mutually couple round tubes during storage and/or manual transport or by crane, **characterized in that**, a clip together profile (1) or spiderclip is constructed in such a way, that several tubes or scaffold tubes (8) with diameter D can be quickly mutually clipped together detachably by hand without any further means in a holder with a number of all round protruding tube stubs or annuluses (2, 3, 4).

2. Device as claimed in claim 1, **characterized in that**, said clip together profile (1) is constructed of at least four tube stubs or annuluses (2, 3, 4) with wall thickness t, out of which a ring sector of approximately 90 degrees has been removed and in which the remaining part of the tube stubs or annuluses (2, 3, 4, 5) are attached to each other by means of ribs (6, 7, 8, 9) and a stiffening disc (10).

3. Device as claimed in claims 1-2, **characterized in that**, for an embodiment of the clip together profile (1) four tube stubs or annuluses (2, 3, 4) are mutually coupled at 90 degrees by means of said ribs (5, 6, 7) and matching stiffening disc (11).

4. Device as claimed in claims 1-3, **characterized in that**, the clip together profile (1) is made as one piece by means of injection moulding with a working length X.

5. Device as claimed in claims 1-4, **characterized in that**, the diameter D is approximately 40-55 mm and the length X is approximately 18 mm and the wall thickness t is approximately 3 or 4 mm with at the ends near the opening a cylinder-shaped end for easily inserting and removing said tubes in a cylinder-shaped beaded edge (12).

6. Device as claimed in aforementioned claims, **characterized in that**, the material of said clip together profile (1) is a plastic, such as, for example, polyacetate or polyoxymethylene (POM).

7. Device as claimed in aforementioned claims, **characterized in that**, said to be clipped together tubes with diameter D are aluminium or steel scaffold pipes (8) with a common diameter of approximately 40-55 mm.

8. Device as claimed in aforementioned claims, **characterized in that**, on the clip together profile (1), made by means of injection moulding, industrial marks, logo's, instructions and such are applied.

9. Work method in which the device according to claims 1-8 is used, being the clip together profile as claimed in aforementioned claims, **characterized in that**, for example, for clipping together several, such as four, tubes or scaffold pipes (8) preferably at least two clip together profiles (1) or spiderclips are used, to be placed at a suitable distance from the ends of the mutually coupable tube profiles or scaffold pipes (13, 14, 15, 16).
